# FASCICULE DE BREVET EUROPEEN

(11) **EP 0 824 951 B1**
(45) Date de publication et mention de la délivrance du brevet: **24.11.2004**
(21) Numéro de dépôt: 97401952.3
(22) Date de dépôt: 19.08.1997
(51) Int. Cl.: B01D 53/04, B01D 53/22, F25J 3/04

(54) **Installation de séparation d'un mélange gazeux**
Anlage zur Trennung einer Gasmischung
Installation for the separation of a gas mixture

(30) Priorité: 21.08.1996 FR 9610340
(43) Date de publication de la demande: 25.02.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Peyron, Jean-Marc, 94000 Creteil (FR); Tsevery, Jean-Marc, 77127 Lieusaint (FR)
(74) Mandataire: Mercey, Fiona Susan

(56) Documents cités:
- EP-A- 0 588 705
- EP-A- 0 629 829
- WO-A-90/08932
- FR-A- 2 108 901
- US-A- 4 509 959

## Description

Cette invention concerne une installation de séparation d'air par distillation.

Ces installations possèdent une salle centrale de contrôle et de commande, une salle centrale d'analyse et une salle centrale électrique où sont centralisés les appareils de contrôle, de commande, d'analyse et de distribution électrique basse tension pour toute l'installation. Cette centralisation a pour effet de ralentir le temps de réaction des analyseurs et des mécanismes de contrôle et nécessite un câblage d'une grande complexité.

L'objet de la présente invention est une installation ayant un temps de réaction plus rapide avec une construction plus simple et donc moins chère qui permet la mise en oeuvre du concept de « modularité ». Dans les installations modulaires, les modules peuvent être retirés ou ajoutés à volonté selon les besoins de l'utilisateur, ce qui nécessitait des interventions au niveau des salles centrales. La présente invention permet de modifier les installations avec un minimum de perturbation du reste de l'installation.

Selon l'objet de la présente invention, il est prévu une installation selon la revendication 1.

Ces cabines peuvent être préfabriquées et sont facilement installées à côté de l'unité à laquelle elles sont associées.

Chaque unité peut être associée à une seule cabine où sont regroupés tous les systèmes.

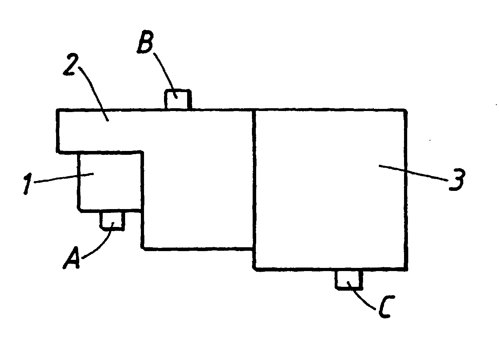

La figure montre un schéma d'une installation selon l'invention.

Dans l'unité 1 se trouvent les compresseurs d'une installation de séparation d'air. La cabine A contient les départs basse tension pour ces compresseurs, les analyseurs des températures de l'eau de réfrigération des compresseurs et les capteurs et actionneurs des compresseurs.

L'air comprimé par les compresseurs de l'unité 1 est ensuite épuré dans les lits d'adsorbants de l'unité d'épuration 2, les parties contrôle, commande, analyse et basse tension se trouvant dans la cabine B.

Après l'épuration, l'air passe à l'unité de distillation 3 qui a également sa cabine C où sont regroupés les systèmes de contrôle, commande, analyse et basse tension.

Chaque cabine A, B, C, peut être reliée à une unique salle de supervision regroupant l'information collectée dans les cabines.

## Revendications

1. Installation de séparation d'air par distillation comprenant au moins une unité de compression (1) contenant des compresseurs, une unité d'épuration (2) et une unité de séparation (3) chaque unité (1, 2, 3) de l'installation étant associée à une cabine respective (A, B, C) où sont regroupés les systèmes de contrôle, de commande et d'analyse et la distribution électrique pour cette seule unité,
**caractérisée en ce que**
la cabine (A) associée à l'unité de compression (1) contenant les départs basse tension pour les compresseurs, tes analyseurs de température d'eau de réfrigération des compresseurs et les capteurs et les actionneurs des compresseurs.

2. Installation selon la revendication 1 n'ayant aucune salle centrale de contrôle, de commande ou d'analyse et aucune salle centrale électrique.

3. Installation selon l'une des revendications précédentes dans laquelle chaque cabine est reliée à une unique salle de supervision (D) regroupant l'information collectée dans les cabines.

## Patentansprüche

1. Anlage zur Trennung von Luft durch Destillation mit zumindest einer Kompressionseinheit (1), die Kompressoren enthält, einer Reinigungseinheit (2) und einer Trenneinheit (3), wobei jede Einheit (1, 2, 3) der Anlage mit einer jeweiligen Zelle (A, B, C) verknüpft ist, in der die Kontroll-, Steuerund Analysesysteme und die Elektrizitätsverteilung für diese einzelne Einheit gruppiert sind,
**dadurch gekennzeichnet, dass** die mit der Kompressionseinheit (1) verknüpfte Zelle (A) die Niederspannungsausgänge für die Kompressoren, die Temperaturanalysatoren für das Kühlwasser der Kompresoren und die Aufnehmer und Betätigungsglieder der Kompressoren enthält.

2. Anlage nach Anspruch 1, ohne eine zentrale Kontroll-, Steuer- oder Analysewarte und ohne zentralen Elektrizitätsraum.

3. Anlage nach einem der vorhergehenden Ansprüche, bei der jede Zelle mit einer einzigen Überwachunsgwarte (D) verbunden ist, die die in den Zellen gesammelte Information umgruppiert.

## Claims

1. Plant for separating air by distillation, comprising at least one compression unit (1) containing compressors, a purification unit (2) and a separating unit (3), each unit (1, 2, 3) of the plant being associated with a respective cabin (A, B, C) in which the monitoring, control and analysis systems and the electrical distribution for this unit alone are grouped together, **characterized in that** the cabin (A) associated with the compression unit (1) contains the low-voltage output devices for the compressors, the means for analysing the temperatures of the cooling water for the compressors, and the sensors and the actuators for the compressors.

2. Plant according to Claim 1, having no central monitoring, control or analysis room and no central electrical room.

3. Plant according to either of the preceding claims, in which each cabin is linked to a single supervision room (D) bringing together the information collected in the cabins.
